# EUROPÄISCHE PATENTSCHRIFT

(11) **EP 3 638 943 B1**
(45) Veröffentlichungstag und Bekanntmachung des Hinweises auf die Patenterteilung: **11.11.2020**
(21) Anmeldenummer: 18758845.4
(22) Anmeldetag: 14.08.2018
(51) Int. Cl.: F21S 41/20, F21S 41/64, F21S 43/20

(54) **SCHEINWERFER FÜR EIN KRAFTFAHRZEUG SOWIE VERFAHREN ZUM BETREIBEN EINES SCHEINWERFERS**
HEADLAMP FOR A MOTOR VEHICLE AND METHOD FOR OPERATING A HEADLAMP
PROJECTEUR DE VÉHICULE AUTOMOBILE AINSI QUE PROCÉDÉ PERMETTANT DE FAIRE FONCTIONNER UN PROJECTEUR

(30) Priorität: 22.08.2017 DE 102017214656
(43) Veröffentlichungstag der Anmeldung: 22.04.2020
(73) Patentinhaber: Audi AG, 85045 Ingolstadt (DE)
(72) Erfinder: POPPINGA, Benjamin, 85139 Wettstetten (DE)
(86) Internationale Anmeldenummer: PCT/EP2018/072041
(87) Internationale Veröffentlichungsnummer: WO 2019/038141

(56) Entgegenhaltungen:
- EP-A1- 2 979 926
- DE-A1- 10 233 719
- DE-A1-102011 050 163
- DE-A1-102011 105 975
- FR-A1- 2 840 386
- JP-A- H11 222 073
- US-A1- 2014 328 078

## Beschreibung

Die Erfindung betrifft einen Scheinwerfer für ein Kraftfahrzeug. Der Scheinwerfer weist eine Lichtquelle sowie einen Lichtbeeinflussungselement mit einer variierbaren optischen Eigenschaft auf. Die Erfindung betrifft außerdem ein Verfahren zum Betreiben eines Scheinwerfers für ein Kraftfahrzeug.

Der Scheinwerfer kann zum Bereitstellen eines Abblendlichts und/oder eines Fernlichts für das Kraftfahrzeug ausgebildet sein. Insbesondere ist der Scheinwerfer als Frontscheinwerfer des Kraftfahrzeugs ausgebildet. Das Kraftfahrzeug kann vorzugsweise zwei derartige Frontscheinwerfer aufweisen.

Es ist bekannt, Frontscheinwerfer mit bewegbaren Spiegeln auszustatten, um die Abstrahlung unterschiedlicher Lichtverteilungen zu ermöglichen. Beispielsweise offenbart die DE 10 2013 108 329 A1 einen Scheinwerfer für Fahrzeuge zur Erzeugung einer blendfreien Fernlichtfunktion. Eine Sensoreinrichtung erfasst entgegenkommende und/oder vorausfahrende Verkehrsteilnehmer. Eine Steuereinrichtung steuert eine Lichtquelle und/oder eine Optikeinheit des Scheinwerfers derart, dass eine den entgegenkommenden und/oder vorausfahrende Verkehrsteilnehmer nicht blendende Fernlichtverteilung erzeugbar ist. Die Optikeinheit weist eine Basislicht-Reflektorscherbe zur Erzeugung einer Basis-Lichtverteilung und mindestens eine Fernlicht-Reflektorscherbe zur Erzeugung einer Zusatz-Lichtverteilung auf.

Außerdem ist es bekannt, unterschiedliche Lichtverteilungen durch Beeinflussung eines Lichtbündels mittels elektrochromer Elemente zu erzeugen. Die DE 103 30 215 A1 offenbart einen Scheinwerfer für Fahrzeuge mit einer Lichtquelle und mit einem Lichtbeeinflussungsteil, das mit einem elektrochromen Element versehen ist mit veränderlicher Licht-/Strahlungsdurchlässigkeit. Durch eine Mehrzahl nebeneinander angeordnete elektrochrome Elemente sind unterschiedliche Lichtfunktionen einstellbar. Die DE 10 2011 105 975 A1 beschreibt einen Scheinwerfer mit einer Strahlungsaustrittsöffnung, deren optischer Transmissionsgrad gesteuert und/oder geregelt wird. Die DE 10 2013 108 811 A1 offenbart einen Scheinwerfer Erzeugung eines blendfreien Fernlichts mit einem flächenhaft ausgebildeten Optikelement, welches bei angelegter elektrischer Spannung höher transparent ist als bei abgeschalteter elektrischer Spannung.

Zum Ermöglichen einer besseren Sichtbarkeit von Kraftfahrzeugen während einer Fahrt am Tage, ist es üblich, Kraftfahrzeuge mit einem Tagfahrlicht auszustatten. Zum Bereitstellen des Tagfahrlichts sind üblicherweise von dem Frontscheinwerfer unterschiedliche weitere Beleuchtungsmittel vorgesehen.

Die DE 102 33 719 A1 betrifft eine Leuchte mit einer Abdeckung zur Erzeugung einer Mehrfachfunktionalität, welche einen in seiner optischen Wirkung veränderbaren, elektrischen Diffusor aufweist. Offenbart ist außerdem ein Einsatz des Diffusors zum Umschalten zwischen Fernlicht (gerichtete Abstrahlung zur Ausleuchtung der Fahrbahn) und Tagfahrlicht (gestreute Abstrahlung zur besseren Erkennbarkeit des Fahrzeugs).

Es ist Aufgabe der vorliegenden Erfindung, eine verbesserte Sichtbarkeit eines Scheinwerfers eines Kraftfahrzeugs zu ermöglichen.

Ein erfindungsgemäßer Scheinwerfer ist in Anspruch 1 definiert.

Ein gattungsgemäßer Scheinwerfer für ein Kraftfahrzeug weist auf:
- eine Lichtquelle zum Abstrahlen eines Lichtbündels, und
- ein Lichtbeeinflussungselement, welches eine optische Eigenschaft aufweist, die elektrisch variierbar ist, wobei das Lichtbeeinflussungselement in einem Strahlengang des Lichtbündels angeordnet ist. Die Lichtquelle kann beispielsweise als Glühbirne, als Halogenlampe, als einzelne LED, als Anordnung von mehreren LEDs, als oLED, als Xenon-Lichtquelle, als einzelne Laserdiode, als Anordnung mehrerer Laserdioden oder als beliebige andere Lichtquelle ausgeführt sein.

Um eine verbesserte Bereitstellung einer blendfreien Lichtverteilung und eines Tagfahrlichts durch den Scheinwerfer zu ermöglichen, ist vorgesehen, dass
- das Lichtbeeinflussungselement aus elektrotropem Material ausgeführt ist, und
- die elektrisch variierbare optische Eigenschaft die Lichtbrechung des Lichtbeeinflussungselement betrifft.

Erfindungsgemäß ist vorgesehen, dass das elektrotrope Material in mehrere Teilbereiche unterteilt ist, deren jeweilige optische Eigenschaft elektrisch einzeln variierbar ist.

Als elektrotropes Material im Sinne der Erfindung ist insbesondere ein Material zu verstehen, dessen Moleküle ihre Ausrichtung abhängig von einer elektrischen Steuerspannung, welche an das Material angelegt wird, verändern können. Der Brechungsindex des elektrotropem Materials kann sich in Abhängigkeit von der Ausrichtung der Moleküle verändern. Mit anderen Worten ist der Brechungsindex des elektrotropen Materials mit der an das Material angelegten elektrischen Steuerspannung verknüpft. Insbesondere handelt es sich bei dem elektrotropen Material um elektrotropes Glas. Abhängig von dem Brechungsindex des elektrotropem Materials wird Licht, welches durch das elektrotrope Material transmittiert wird, unterschiedlich stark gestreut. Je größer der Brechungsindex ist, desto milchiger kann ein optischer Eindruck des elektrotropem Materials werden. Je kleiner der Brechungsindex ist, desto klarer kann ein optischer Eindruck des elektrotropem Material sein. Mit anderen Worten kann der optische Eindruck des elektrotropen Materials zwischen milchig und klar variiert werden.

Somit ist das Lichtbeeinflussungselement dazu ausgebildet, das Lichtbündel aus der Lichtquelle beim Transmittieren abhängig von dem Brechungsindex des Lichtbeeinflussungselement unterschiedlich stark zu brechen beziehungsweise zu streuen. Insbesondere ist das Lichtbeeinflussungselement dazu ausgebildet, das Lichtbündel aus der Lichtquelle beim Transmittieren abhängig von einer an das Lichtbeeinflussungselement angelegten Steuerspannung unterschiedlich stark zu brechen beziehungsweise zu streuen. Beispielsweise ist das Lichtbeeinflussungselement beziehungsweise das elektrotrope Material innerhalb des Scheinwerfers oder an einem Lichtauslass des Scheinwerfers angeordnet. Das Lichtbeeinflussungselement ist derart als Teil des Scheinwerfers angeordnet, dass das durch den Scheinwerfer beziehungsweise die Lichtquelle abgestrahlte Licht teilweise oder vollständig durch das Lichtbeeinflussungselement beeinflussbar ist. Mit anderen Worten ist das Lichtbeeinflussungselement im Strahlengang des gesamten Lichtbündels oder nur eines Teils des Lichtbündels angeordnet.

An dem Lichtbeeinflussungselement stark gestreutes beziehungsweise gebrochenes Licht kann im Vergleich zu weniger stark gestreutem beziehungsweise gebrochenem Licht in einer hellen Umgebung (unter Tags) eine bessere Sichtbarkeit für den Menschen aufweisen. Insbesondere kann eine verbesserte Sichtbarkeit in der hellen Umgebung des Scheinwerfers gewährleistet sein, je stärker das durch den Scheinwerfer abgestrahlte Licht durch das Lichtbeeinflussungselement gestreut beziehungsweise gebrochen wird. Auf der anderen Seite kann in einer dunklen Umgebung (nachts) eine verbesserte Ausleuchtung eines Umgebungsbereichs gewährleistet werden, je weniger das durch den Scheinwerfer abgestrahlte Licht durch das Lichtbeeinflussungselement gestreut beziehungsweise gebrochen wird.

Der Scheinwerfer kann zusätzlich eine Steuereinheit aufweisen, welche das Variieren der Lichtbrechung des elektrotropem Materials steuert. Insbesondere ist die Steuereinheit zum Anlegen der Steuerspannung an das elektrotrope Material ausgebildet.

Es ist vorgesehen, dass der Transmissionsgrad des Lichtbeeinflussungselement beim Variieren der Lichtbrechung zwischen zwei beliebigen Zuständen maximal um 50 %, um 30 %, um 20 %, um 10 % oder um 5 % verringert. Mit anderen Worten verringert sich der Transmissionsgrad beim Variieren der Lichtbrechung des Lichtbeeinflussungselements maximal um ein vorbestimmtes Maß. Somit verringert sich eine durch den Scheinwerfer abgestrahlte Lichtstärke beziehungsweise Intensität beim Variieren der Lichtbrechung maximal um 50 %, um 30 %, um 20 %, um 10 % oder um 5 %. Im Allgemeinen ist vorgesehen, dass beim Variieren der Lichtbrechung des Lichtbeeinflussungselement der Transmissionsgrad nur geringfügig beeinflusst wird. Insbesondere betrifft der Transmissionsgrad beziehungsweise die abgestrahlte Intensität die Summe aus diffus und gerichtet transmittiertem beziehungsweise abgestrahltem Licht.

Eine Weiterbildung sieht vor, dass das elektrotrope Material ein Glas ist und in Verbundglasfertigungstechnik in ein Gehäuse, insbesondere in einen verglasten Lichtauslass des Gehäuses, integriert ist. Mit anderen Worten kann das elektrotrope Material in Verbundglasfertigungstechnik als Teil eines Scheinwerferglases gefertigt sein. Dadurch ergibt sich eine besonders vorteilhafte und kompakte Bauform des Scheinwerfers.

Es ist vorgesehen, dass das elektrotrope Material in mehrere Teilbereiche unterteilt ist, deren jeweilige optische Eigenschaft elektrisch einzeln variierbar ist. Im Falle des elektrotropem Glases ist das elektrotrope Glas in mehrere Teilbereiche unterteilt, deren jeweilige optische Eigenschaft elektrisch unterteilbar ist. In diesem Fall kann die Steuereinheit dazu ausgebildet sein, an jeden der Teilbereiche eine jeweilige Steuerspannung zum Steuern des Teilbereichs anzulegen. Auf diese Weise kann die Lichtabstrahlung des Scheinwerfers besonders gut an unterschiedliche Einsatzszenarien angepasst werden. Außerdem ist die Bereitstellung optischer Effekte und/oder eine gezielte Beeinflussung des Erscheinungsbildes des Scheinwerfers und somit des Kraftfahrzeugs möglich.

Eine Weiterbildung sieht vor, dass sich beim elektrischen Variieren die Lichtbrechung des Lichtbeeinflussungselements mit steigender Steuerspannung verringert. Dementsprechend kann sich beim elektrischen Variieren die Lichtbrechung des Lichtbeeinflussungselements mit fallender Steuerspannung erhöhen. In anderen Ausführungsformen kann dies umgekehrt sein: Mit steigender Steuerspannung erhöht sich die Lichtbrechung des Lichtbeeinflussungselements und mit fallender Steuerspannung verringert sich die Lichtbrechung des Lichtbeeinflussungselement. Insbesondere kann durch geeignete Wahl der Ausführungsform vorgegeben werden, ob die Lichtbrechung des Lichtbeeinflussungselements bei einem Ausfall der Steuerspannung einen hohen oder einen geringen Wert annimmt.

Eine Weiterbildung sieht vor, dass das Lichtbeeinflussungselement nur im Strahlengang eines Teils des Lichtbündels angeordnet ist. Mit anderen Worten ist die Anordnung des Lichtbeeinflussungselements derart gewählt, dass ein Teil des Lichtbündels an dem Lichtbeeinflussungselement vorbeigeführt wird. Auf diese Weise kann vorgesehen sein, dass nur ein Anteil des Lichtbündels der Lichtquelle zum Bereitstellen des Tagfahrlichts beziehungsweise des Abblendlichts genutzt wird.

Ein zweiter Aspekt der Erfindung betrifft ein Verfahren gemäß Anspruch 5 zum Betreiben eines Scheinwerfers für ein Kraftfahrzeug. Dabei sind folgende Schritte vorgesehen:
- Abstrahlen eines Lichtbündels durch eine Lichtquelle, und
- elektrisches Variieren einer optischen Eigenschaft eines Lichtbeeinflussungselements zum Beeinflussen des Lichtbündels.

Um die erfindungsgemäße Aufgabe zu lösen ist vorgesehen, dass
- das Lichtbeeinflussungselement aus einem elektrotropen Material ausgeführt ist, und
- bei dem elektrischen Variieren eine Lichtbrechung des Lichtbeeinflussungselements verändert wird. Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Scheinwerfers beschrieben worden sind. Aus diesem Grund sind die entsprechenden Weiterbildungen des erfindungsgemäßen Verfahrens hier nicht noch einmal beschrieben.

Weiterhin ist vorgesehen, dass das elektrotrope Material in mehrere Teilbereiche unterteilt ist, deren jeweilige optische Eigenschaft elektrisch einzeln variiert wird.

Eine Weiterbildung des Verfahrens sieht vor, dass das elektrotrope Material zur Realisierung eines Tagfahrlichts in einen ersten Zustand einer Lichtbrechung und zur Realisierung eines Abblendlichts in einen zweiten Zustand einer Lichtbrechung geschaltet wird, wobei die Lichtbrechung in dem ersten Zustand höher ist als in dem zweiten Zustand. Mit anderen Worten wird für das elektrotrope Material zur Realisierung des Tagfahrlichts eine größere Lichtbrechung gewählt als zur Realisierung des Abblendlichts. Durch die größere Lichtbrechung und daraus resultierend einer größeren Streuung beziehungsweise Brechung des Lichtbündels der Lichtquelle, kann sich eine bessere Sichtbarkeit des Scheinwerfers, insbesondere in seiner Funktion als Tagfahrlicht, ergeben. Durch die geringere Lichtbrechung und daraus resultierend einer geringeren Streuung beziehungsweise Brechung des Lichtbündels der Lichtquelle kann sich eine bessere Ausleuchtung eines Umgebungsbereichs, beispielsweise der Straße, ergeben.

Eine Weiterbildung sieht vor, dass jeweilige optische Eigenschaften mehrerer Teilbereiche des Lichtbeeinflussungselements zur Erzeugung einer vorgegebenen Lichtverteilung einzeln variiert werden. Insbesondere wird für jeden der Teilbereiche die optische Eigenschaft unabhängig von den übrigen Teilbereichen vorgegeben. Auf diese Weise können Lichteffekte als die vorgegebenen Lichtverteilung dargestellt werden. Insbesondere kann das Erscheinungsbild eines Kraftfahrzeugs mit einem solchen Scheinwerfer besonders individuell beeinflusst werden.

Eine Weiterbildung sieht vor, dass die jeweiligen optische Eigenschaften der Teilbereiche des Lichtbeeinflussungselements zur Erzeugung eines dynamischen Lichteffekts dynamisch variiert werden. Insbesondere werden die Teilbereiche zum dynamischen Variieren unabhängig voneinander dynamisch angesteuert. Hierzu kann beispielsweise eine jeweilige, zeitlich veränderbare Steuerspannung an jeden der Teilbereiche angelegt werden. Hierdurch kann das Erscheinungsbild des Kraftfahrzeugs noch besser individuell beeinflusst werden.

Im Folgenden sind Ausführungsbeispiele der Erfindung beschrieben. Hierzu zeigt:
- Fig. 1: einen Scheinwerfer für ein Kraftfahrzeug in einer schematischen Schnittansicht; und
- Fig. 2: den Scheinwerfer für das Kraftfahrzeug in einer schematischen Frontansicht.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

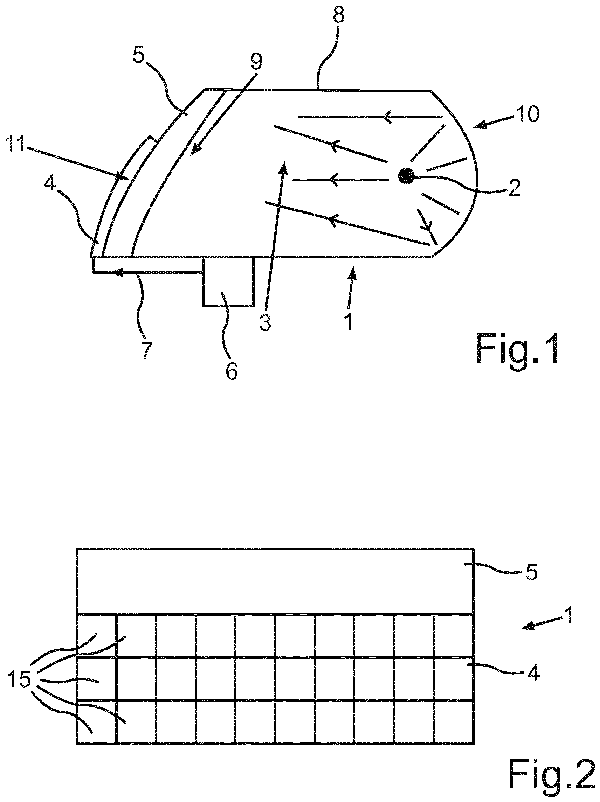

Fig. 1 zeigt in einer schematischen Schnittansicht einen Scheinwerfer 1 mit einer Lichtquelle 2, einem Gehäuse 8 und einem Lichtauslass 9. Fig. 2 zeigt den selben Scheinwerfer in einer Frontansicht. Der Lichtauslass 9 ist verglast. Mit anderen Worten ist der Lichtauslass 9 durch ein Scheinwerferglas 5 gebildet. Durch das Scheinwerferglas 5 ist das Gehäuse 8 vorliegend abgeschlossen. Die Lichtquelle 2 kann beispielsweise als Glühbirne, als Halogenlampe, als einzelne LED, als Anordnung von mehreren LEDs, als oLED, als Xenon-Lichtquelle, als einzelne Laserdiode, als Anordnung mehrerer Laserdioden oder als beliebige andere Lichtquelle ausgeführt sein.

Die Lichtquelle 2 ist dazu ausgebildet, ein Lichtbündel 3 abzustrahlen. Insbesondere ist das Gehäuse 8 zumindest partiell als Reflektor 10 ausgebildet. Der Reflektor 10 ist ausgebildet, das Lichtbündel 3 zu reflektieren. Insbesondere wird das Lichtbündel 3 in Richtung des Lichtauslasses 9 reflektiert beziehungsweise abgestrahlt. Durch den Lichtauslass 9 kann das Lichtbündel 3 den Scheinwerfer 1 verlassen und kann nach außen hin als Nutzlicht bereitgestellt werden.

An dem Lichtauslass 9 ist ein Lichtbeeinflussungselement 4 angeordnet. Das Lichtbeeinflussungselement 4 ist als elektrotropes Material 11, insbesondere als elektrotropes Glas, ausgeführt. Mittels des Lichtbeeinflussungselements 4 ist das Lichtbündel 3, welches durch den Scheinwerfer 1 abgestrahlt wird, beeinflussbar. Insbesondere weist das Lichtbeeinflussungselement 4 beziehungsweise das elektrotrope Material 11 eine optische Eigenschaft auf, die elektrisch variierbar ist. Insbesondere ist die optische Eigenschaft des elektrotropen Materials 11 auf molekularer Ebene elektrisch variierbar. Insbesondere ist die optische Eigenschaft des Lichtbeeinflussungselements 4 zumindest im Wesentlichen unter Verzicht auf bewegbare Bauteile beeinflussbar. Mit anderen Worten wird die optische Eigenschaft variiert, ohne Bauteile, wie beispielsweise Mikrospiegel, zu bewegen.

Als optische Eigenschaft des Lichtbeeinflussungselements 4 beziehungsweise des elektrotropem Materials 11 ist die Lichtbrechung variierbar. Mit anderen Worten ermöglicht das elektrotrope Material 11 eine elektrische Variation der Lichtbrechung des Lichtbeeinflussungselements 4. Konkret kann beim Variieren der Lichtbrechung des Lichtbeeinflussungselements 4 beziehungsweise des elektrotropem Materials 11 dessen Brechungsindex variiert werden.

Beim Variieren der Lichtbrechung des elektrotropem Materials 11 verringert sich insbesondere der Transmissionsgrad des elektrotropem Materials 11 um weniger als 50 %, 30 %, 20 %, 10 % oder 5 %. Insbesondere bleibt beim Variieren der Lichtbrechung der Transmissionsgrad im Wesentlichen konstant oder verändert sich maximal um ein vorbestimmtes Maß. Somit ist ein durch den Scheinwerfer 1 abgestrahlter Lichtstrom beim Variieren der Lichtbrechung des elektrotropem Materials 11 im Wesentlichen konstant oder verringert sich maximal um ein vorbestimmtes Maß.

Vorliegend ist das Lichtbeeinflussungselement 4 mittels Verbundglasfertigungstechnik in das Scheinwerferglas 5 integriert. Mit anderen Worten sind das Lichtbeeinflussungselement 4 und das Scheinwerferglas 5 gemeinsam in Verbundglasfertigungstechnik gefertigt.

Der Scheinwerfer 1 weist eine Steuereinheit 6 auf, die dazu ausgebildet ist eine Steuerspannung 7 an das Lichtbeeinflussungselement 4 beziehungsweise das elektrotrope Material 11 anzulegen. Mittels der Steuerspannung 7 ist die Lichtbrechung des Lichtbeeinflussungselements 4 variierbar. Insbesondere hängt der Brechungsindex des Lichtbeeinflussungselements 4 von einem Wert der Steuerspannung 7 ab.

Beim Variieren der Lichtbrechung kann sich der Brechungsindex des elektrotropem Materials 11 mit steigender Steuerspannung 7 vergrößern. Dementsprechend kann sich beim Variieren der Lichtbrechung der Brechungsindex des elektrotropen Materials 11 mit fallender Steuerspannung 7 verringern. Alternativ kann sich in einer anderen Ausführungsform der Brechungsindex des elektrotropen Materials 11 mit steigender Steuerspannung 7 verringern. Dementsprechend kann sich in dieser Ausführungsform der Brechungsindex des elektrotropen Materials 11 mit fallender Steuerspannung 7 vergrößern.

Insbesondere ist vorgesehen, dass zum Bereitstellen einer Tagfahrlichtfunktion durch den Scheinwerfer 1, insbesondere für ein Kraftfahrzeug, das Lichtbeeinflussungselement 4 in einen ersten Zustand einer Lichtbrechung geschaltet wird. Zusätzlich kann vorgesehen sein, dass zum Bereitstellen einer Abblendlichtfunktion durch den Scheinwerfer 1, insbesondere für das Kraftfahrzeug, das Lichtbeeinflussungselement 4 in einen zweiten Zustand der Lichtbrechung geschaltet wird. Dabei ist die Lichtbrechung des Lichtbeeinflussungselements 4 in dem ersten Zustand vorzugsweise größer als in dem zweiten Zustand. Durch eine größere Lichtbrechung kann in einer helleren Umgebung beziehungsweise unter Tags eine bessere Sichtbarkeit des Scheinwerfers 1 erzielt werden. Durch eine geringere Lichtbrechung kann in einer dunkleren Umgebung, beispielsweise nachts, eine bessere Ausleuchtung eines Umgebungsbereichs, insbesondere einer Fahrbahn, erzielt werden.

Mit anderen Worten kann durch den Scheinwerfer 1 durch Steuern der Lichtbrechung des Lichtbeeinflussungselements 4 ein Tagfahrlicht oder ein Abblendlicht bereitgestellt werden. Dabei kann durch den Scheinwerfer abgestrahltes Licht anhand der Lichtbrechung des Lichtbeeinflussungselements 4 an den jeweiligen Beleuchtungszweck (Tagfahrlicht oder Abblendlicht) angepasst werden.

Gemäß Fig. 2 ist das Lichtbeeinflussungselement 4 in eine Vielzahl an Teilbereichen 15 unterteilt. Jeder der Teilbereiche 15 durch die Steuereinheit 6 einzeln ansteuerbar sein. Insbesondere kann durch die Steuereinheit 6 an jeden der Teilbereiche 15 eine jeweilige Steuerspannung angelegt werden. Somit kann die jeweilige Lichtbrechung jedes der Teilbereiche 15 unabhängig variiert werden.

Durch die Unterteilung des Lichtbeeinflussungselements 4 in die Teilbereiche 15 können unterschiedliche optische Effekte durch den Scheinwerfer 1 dargestellt werden. Beispielsweise können unterschiedliche Erscheinungsbilder des Scheinwerfers 1 erzielt werden. Beispielsweise kann durch geeignetes Ansteuern der Teilbereiche 15 ein sportliches, ein elegantes oder ein besonders gut sichtbares Erscheinungsbild des Scheinwerfers 1 eingestellt werden. In dem sportlichen Erscheinungsbild des Scheinwerfers 1 beispielsweise eine zackige Kontur durch die unterschiedliche Lichtbrechung der Teilbereiche 15 gegeben. In dem eleganten Erscheinungsbild ist beispielsweise eine dezente Kontur durch die unterschiedliche Lichtbrechung der Teilbereiche 15 gegeben.

Zusätzlich kann durch das Variieren der Lichtbrechung des Lichtbeeinflussungselements 4 beziehungsweise der Teilbereiche 15 ein Blenden anderer Verkehrsteilnehmer vermieden werden. Beispielsweise wird für diejenigen Teilbereiche 15 eine hohe Lichtbrechung vorgegeben, welche Licht in Richtung des anderen Verkehrsteilnehmers transmittieren.

Die unterschiedlichen Erscheinungsbilder des Scheinwerfers 1 können zusätzlich dynamisch vorgegeben werden. Hierzu kann die Steuereinheit 6 die jeweiligen Steuerspannungen der Teilbereiche 15 dynamisch ansteuern. Dynamisch bedeutet insbesondere, dass das Erscheinungsbild beziehungsweise die Steuerspannungen zeitlich verändert werden. Auf diese Weise kann beispielsweise ein Zwinkern des Scheinwerfers 1 oder ein Wischen visualisiert werden. Durch das Wischen kann einem Fußgänger eine Straßenüberquerung ermöglicht werden.

Vorliegend bedeckt das Lichtbeeinflussungselement 4 nicht das gesamte Scheinwerferglas 5. Dadurch wird ein Teil des durch den Scheinwerfer 1 abgestrahlten Lichts beziehungsweise des Lichtbündels 3 nicht durch das Lichtbeeinflussungselement 4 beeinflusst. Somit steht immer ein festgelegter Anteil des Lichtbündels 3 zum Ausleuchten der Umgebung bereit. In anderen in den Figuren nicht gezeigte Ausführungsformen kann das Lichtbeeinflussungselement 4 das gesamte Scheinwerferglas 5 bedecken.

Insgesamt zeigen die Beispiele, wie durch einen erfindungsgemäßen Scheinwerfer auch eine verbesserte Bereitstellung des Tagfahrlichts ermöglicht wird.

## Patentansprüche

1. Scheinwerfer (1) für ein Kraftfahrzeug, mit
- einer Lichtquelle (2) zum Abstrahlen eines Lichtbündels (3), und
- einem Lichtbeeinflussungselement (4), welches eine optische Eigenschaft aufweist, die elektrisch variierbar ist, wobei das Lichtbeeinflussungselement (4) in einem Strahlengang des Lichtbündels (3) angeordnet ist, wobei
- das Lichtbeeinflussungselement (4) aus elektrotropen Material (11) ausgeführt ist, und
- die elektrisch variierbare optische Eigenschaft die Lichtbrechung des Lichtbeeinflussungselements (4) betrifft, wobei
- das elektrotrope Material (11) in mehrere Teilbereiche (15) unterteilt ist, deren jeweilige optische Eigenschaft elektrisch einzeln variierbar ist, **dadurch gekennzeichnet, dass**
- der Scheinwerfer (1) dazu ausgebildet ist, durch das Variieren der Lichtbrechung der Teilbereiche (15) ein Blenden anderer Verkehrsteilnehmer zu vermeiden, indem für diejenigen Teilbereiche (15), welche Licht in Richtung des anderen Verkehrsteilnehmers transmittieren, eine hohe Lichtbrechung vorgegeben wird, wobei
- sich der Transmissionsgrad des Lichtbeeinflussungselements (4) beim Variieren der Lichtbrechung zwischen zwei beliebigen Zuständen maximal um 50% verringert.

2. Scheinwerfer (1) nach Anspruch 1,
**dadurch gekennzeichnet, dass**
das elektrotrope Material ein elektrotropes Glas ist und in Verbundglasfertigungstechnik in ein Gehäuse, insbesondere in einen verglasten Lichtauslass (9) des Gehäuses, integriert ist.

3. Scheinwerfer (1) nach einem der vorhergehenden Ansprüche,
**dadurch gekennzeichnet, dass**
sich beim elektrischen Variieren die Lichtbrechung des Lichtbeeinflussungselements (4) mit einer steigender Steuerspannung (7) verringert.

4. Scheinwerfer (1) nach einem der vorhergehenden Ansprüche,
**dadurch gekennzeichnet, dass**
das Lichtbeeinflussungselement (4) nur im Strahlengang eines Teils des Lichtbündels (3) angeordnet ist.

5. Verfahren zum Betreiben eines Scheinwerfers (1) für ein Kraftfahrzeug, mit den Schritten:
- Abstrahlen eines Lichtbündels (3) durch eine Lichtquelle, und
- elektrisches Variieren einer optischen Eigenschaft eines Lichtbeeinflussungselements (4) zum Beeinflussen des Lichtbündels (3), wobei
- das Lichtbeeinflussungselement (4) aus einem elektrotropen Material (11) ausgeführt ist, und
- bei dem elektrischen Variieren eine Lichtbrechung des Lichtbeeinflussungselements (4) verändert wird, wobei
- das elektrotrope Material (11) in mehrere Teilbereiche (15) unterteilt ist, deren jeweilige optische Eigenschaft elektrisch einzeln variiert wird, **dadurch gekennzeichnet, dass**
- durch das Variieren der Lichtbrechung der Teilbereiche (15) ein Blenden anderer Verkehrsteilnehmer vermieden wird, indem für diejenigen Teilbereiche (15), welche Licht in Richtung des anderen Verkehrsteilnehmers transmittieren, eine hohe Lichtbrechung vorgegeben wird, wobei
- sich der Transmissionsgrad des Lichtbeeinflussungselements (4) beim Variieren der Lichtbrechung zwischen zwei beliebigen Zuständen maximal um 50% verringert.

6. Verfahren nach Anspruch 5,
**dadurch gekennzeichnet, dass**
das elektrotrope Material (11) zur Realisierung eines Tagfahrlichtes in einen ersten Zustand einer Lichtbrechung und zur Realisierung eines Abblendlichts in einen zweiten Zustand einer Lichtbrechung geschaltet wird, wobei die Lichtbrechung in dem ersten Zustand höher ist als in dem zweiten Zustand.

7. Verfahren nach einem der Ansprüche 5 oder 6,
**dadurch gekennzeichnet, dass**
jeweilige optische Eigenschaften mehrerer Teilbereiche (15) des Lichtbrechungselements (4) zur Erzeugung einer vorgegeben Lichtverteilung einzeln variiert werden.

8. Verfahren nach Anspruch 7,
**dadurch gekennzeichnet, dass**
die jeweiligen optische Eigenschaften der Teilbereiche (15) des Lichtbeeinflussungselements (4) zur Erzeugung eines dynamischen Lichteffektes dynamisch variiert werden.

## Claims

1. Headlamp (1) for a motor vehicle, having
- a light source (2) for radiating a light bundle (3), and
- a light influencing element (4) which has an optical property which can be varied electrically, wherein the light influencing element (4) is arranged in a beam path of the light bundle (3), wherein
- the light influencing element (4) is made of electrotropic material (11), and
- the electrically variable optical property concerns the refraction of the light influencing element (4), wherein
- the electrotropic material (11) is subdivided into several partial regions (15), the respective optical property of which can be varied individually electrically, **characterised in that**
- the headlamp (1) is designed to avoid dazzling other road users by means of varying the refraction of the partial regions (15), **in that** a high refraction is predetermined for those partial regions (15) which transmit light in the direction of the other road user, wherein
- the transmission factor of the light influencing element (4) is reduced at most by 50% when varying the refraction between any two states.

2. Headlamp (1) according to claim 1,
**characterised in that**
the electrotropic material is an electrotropic glass and is integrated in a composite glass production technology in a housing, particularly in a glazed light outlet (9) of the housing.

3. Headlamp (1) according to any of the preceding claims,
**characterised in that**
during the electrical varying, the refraction of the light influencing element (4) is reduced with an increasing control voltage (7).

4. Headlamp (1) according to any of the preceding claims,
**characterised in that**
the light influencing element (4) is arranged only in the beam path of a part of the light bundle (3).

5. Method for operating a headlamp (1) for a motor vehicle, having the steps:
- radiating a light bundle (3) by means of a light source, and
- electrically varying an optical property of a light influencing element (4) for influencing the light bundle (3), wherein
- the light influencing element (4) is made of an electrotropic material (11), and
- during the electrical varying, a refraction of the light influencing element (4) is altered, wherein
- the electrotropic material (11) is subdivided into several partial regions (15), the respective optical property of which is varied individually electrically,
**characterised in that**
- it is avoided that other road users are dazzled, by means of varying the refraction of the partial regions (15), **in that** a high refraction is predetermined for those partial regions (15) which transmit light in the direction of the other road user, wherein
- the transmission factor of the light influencing element (4) is reduced at most by 50% when varying the refraction between any two states.

6. Method according to claim 5,
**characterised in that**
the electrotropic material (11) is switched into a first state of a refraction for realising a daytime running light and into a second state of a refraction for realising a dipped beam light, wherein the refraction in the first state is higher than in the second state.

7. Method according to any of claims 5 or 6,
**characterised in that**
respective optical properties of several partial regions (15) of the light influencing element (4) are individually varied for creating a predetermined light effect.

8. Method according to claim 7,
**characterised in that**
respective optical properties of the partial regions (15) of the light influencing element (4) are dynamically varied for creating a dynamic light effect.

## Revendications

1. Phare (1) pour un véhicule automobile, avec
- une source de lumière (2) pour l'émission d'un faisceau lumineux (3), et
- un élément agissant sur la lumière (4), lequel présente une propriété optique, qui peut être modifiée électriquement, dans lequel l'élément agissant sur la lumière (4) est agencé dans un trajet optique du faisceau lumineux (3), dans lequel
- l'élément agissant sur la lumière (4) est réalisé en un matériau électrotrope (11), et
- la propriété optique pouvant être modifiée électriquement concerne la réfraction de la lumière de l'élément agissant sur la lumière (4), dans lequel
- le matériau électrotrope (11) est subdivisé en plusieurs zones partielles (15), dont la propriété optique respective peut être modifiée individuellement électriquement, **caractérisé en ce que**
- le phare (1) est réalisé pour éviter par la variation de la réfraction de la lumière des zones partielles (15), un éblouissement d'autres usagers de la route, par le fait que pour les zones partielles (15), qui transmettent la lumière en direction de l'autre usager de la route, une réfraction élevée de la lumière est prédéfinie, dans lequel
- le degré de transmission de l'élément agissant sur la lumière (4) diminue lors de la variation de la réfraction de la lumière entre deux états quelconques au maximum de 50 %.

2. Phare (1) selon la revendication 1,
**caractérisé en ce que**
le matériau électrotrope est un verre électrotrope et est intégré dans la technique de fabrication de verre composite dans un carter, en particulier dans une sortie de lumière (9) vitrée du carter.

3. Phare (1) selon l'une quelconque des revendications précédentes,
**caractérisé en ce que**
la réfraction de la lumière de l'élément agissant sur la lumière (4) diminue avec l'augmentation de la tension de commande (7) lors de la variation électrique.

4. Phare (1) selon l'une quelconque des revendications précédentes,
**caractérisé en ce que**
l'élément agissant sur la lumière (4) n'est agencé que dans le trajet optique d'une partie du faisceau lumineux (3).

5. Procédé de fonctionnement d'un phare (1) pour un véhicule automobile, avec les étapes de :
- émission d'un faisceau lumineux (3) par une source de lumière, et
- variation électrique d'une propriété optique d'un élément agissant sur la lumière (4) pour agir sur le faisceau lumineux (3), dans lequel
- l'élément agissant sur la lumière (4) est réalisé en un matériau électrotrope (11), et
- lors de la variation électrique, une réfraction de la lumière de l'élément agissant sur la lumière (4) est modifiée, dans lequel
- le matériau électrotrope (11) est subdivisé en plusieurs zones partielles (15), dont la propriété optique respective peut être modifiée individuellement électriquement, **caractérisé en ce que**
- un éblouissement d'autres usagers de la route est évité par la variation de la réfraction de la lumière des zones partielles (15), par le fait que pour les zones partielles (15), qui transmettent la lumière en direction de l'autre usager de la route, une réfraction élevée de la lumière est prédéfinie, dans lequel
- le degré de transmission de l'élément agissant sur la lumière (4) diminue lors de la variation de la réfraction de la lumière entre deux états quelconques au maximum de 50 %.

6. Procédé selon la revendication 5,
**caractérisé en ce que**
le matériau électrotrope (11) est commuté pour la réalisation d'un feu diurne dans un premier état d'une réfraction de la lumière et pour la réalisation d'un feu antiéblouissement dans un deuxième état d'une réfraction de la lumière, dans lequel la réfraction de la lumière dans le premier état est plus grande que dans le deuxième état.

7. Procédé selon l'une quelconque des revendications 5 ou 6,
**caractérisé en ce que**
des propriétés optiques respectives de plusieurs zones partielles (15) de l'élément de réfraction de la lumière (4) sont modifiées individuellement pour la génération d'une distribution de lumière prédéfinie.

8. Procédé selon la revendication 7,
**caractérisé en ce que**
les propriétés optiques respectives des zones partielles (15) de l'élément agissant sur la lumière (4) sont modifiées dynamiquement pour la génération d'un effet de lumière dynamique.
